(19) Europäisches Patentamt
European Patent Office
Office européen des brevets

(11) **EP 1 739 955 A1**

(12) **EUROPEAN PATENT APPLICATION**

(43) Date of publication:
**03.01.2007 Bulletin 2007/01**

(51) Int Cl.:
*H04N 1/40* (2006.01)     *B41J 2/16* (2006.01)

(21) Application number: **06116004.0**

(22) Date of filing: **23.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.06.2005  KR 20050056230**

(71) Applicant: **Samsung Electronics Co., Ltd.**
**Suwon-si**
**442-742 Gyeonggi-Do (KR)**

(72) Inventors:
• **Kang, Ki-min**
  **506-204 Hanseol**
  **Seongnam-si**
  **Gyeonggi-do (KR)**
• **Gahang, Goo-soo**
  **Gyeonggi-do (KR)**

(74) Representative: **Walaski, Jan Filip et al**
**Venner Shipley LLP**
**20 Little Britain**
**London EC1A 7DH (GB)**

(54) **Defective pixel compensation**

(57)     An apparatus and a method for compensating for a defective pixel are provided. The apparatus includes a defective pixel information detecting unit and a halftoning unit. The defective pixel information detecting unit detects whether input continuous grayscale data forms a defective pixel caused by a defective image-forming element and outputs the detected result as defective pixel information. The halftoning unit reflects the defective pixel information in halftoning of the continuous grayscale data using error diffusion. In an image-forming apparatus (such as a printer, an LED etc) reproducing continuous grayscales using a plurality of image-forming elements each forming a limited grayscale, image quality deterioration caused by the defective pixel can be compensated for by performing halftoning in consideration of the defective image-forming element when some of the image-forming elements are defective.

FIG. 3

EP 1 739 955 A1

**Description**

The present invention relates to an apparatus and method arranged to compensate for a defective pixel. More particularly, but not exclusively, the present invention relates to an apparatus and a method for compensating defective pixels that contribute to image quality deterioration caused by the defective pixels. This is achievable by performing halftoning in consideration of a defective image-forming element when some of a plurality of image-forming elements are defective in an image-forming apparatus (e.g., a printer or a light-emitting diode (LED)) which reproduces a continuous grayscale using the image-forming elements forming limited grayscale pixels.

An image-forming apparatus, such as a printer or an LED, comprises a plurality of image-forming elements for producing pixels having a limited grayscale. The image-forming elements may be an array of ink injection nozzles, respective positions on a surface of a photosensitive drum, or an array of LEDs. The image-forming apparatus reproduces a continuous grayscale image using the plurality of image-forming elements.

A conventional inkjet printer can produce a 256 grayscale image by appropriately grouping and arranging pixels to which ink is emitted or not emitted. Halftoning is a known screening technique that can employ a two-dimensional matrix or an error diffusion technique. That is, continuous grayscale data is converted into an amount of limited grayscale data through the halftoning process, and the converted data is input to an image-forming element disposed at a respective position to form a limited grayscale pixel.

However, in the case of a defective image-forming element, such as an ink emission nozzle that cannot emit ink, a defective pixel is generated and, as a result, collected pixel groups containing the defective pixel do not reproduce an exact continuous grayscale.

To compensate for the above defective pixel, a conventional method is provided by which a normal image-forming element forms a grayscale value that the defective image-forming element should provide at a pixel adjacent to the defective pixel.

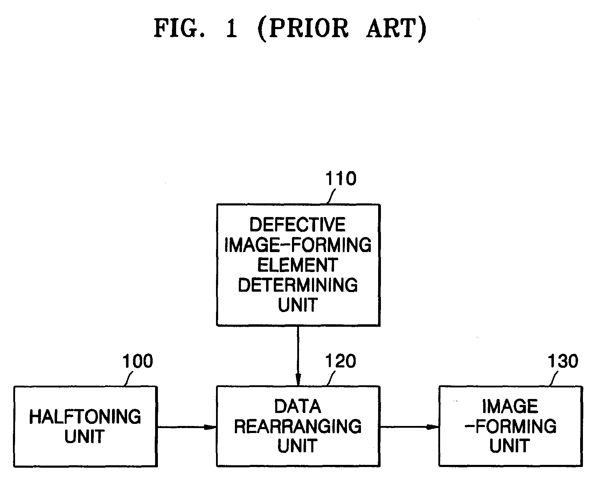

Figure 1 is a block diagram of a conventional apparatus for compensating for a defective pixel in this way.

First, continuous grayscale data (e.g., 256-level grayscale data) is input into a halftoning unit 100. The halftoning unit 100 converts the continuous grayscale data into data that corresponds to a low-level grayscale value that can be reproduced by an image-forming element (i.e., halftoning-processed data) and outputs the same. The value of the halftoning-processed data in an inkjet printer has a value of 0 or 1. For example, an ink emission nozzle that has received halftoning-processed data of 0 does not emit the ink, and an ink emission nozzle that has received halftoning-processed data of 1 emits ink.

A defective image-forming element determining unit 110 detects or stores in advance the position of a defective image-forming element (e.g., an ink emission nozzle that does not emit any ink). This provides information regarding the position of the defective image-forming element to a data rearranging unit 120.

The data rearranging unit 120 determines or detects a defective pixel based on the information regarding the defective image-forming element and rearranges halftoning-processed data provided from the halftoning unit 100. The rearranging data unit performs the rearranging so that the ink may be emitted by an element adjacent to the defective element.

An image-forming unit 130, comprising a plurality of image-forming elements, receives the rearranged halftoning-processed data for forming an image having the above input 256-level grayscale data.

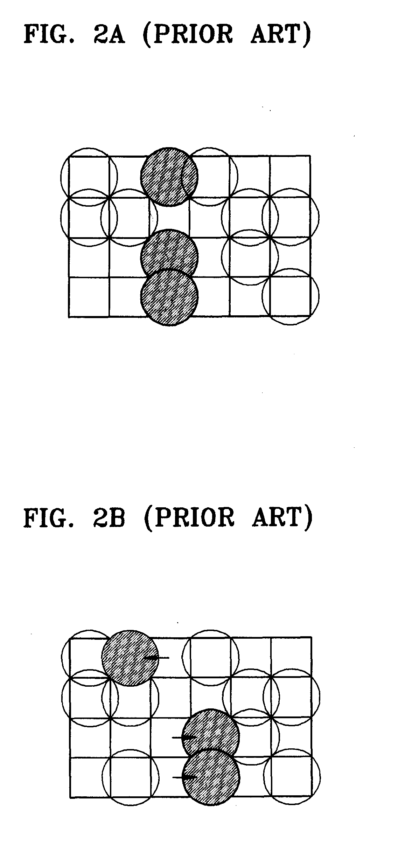

Figures 2A through 2D are conceptual views of a conventional data rearranging technique (which is a known method of compensating for a defective pixel).

Figure 2A illustrates an arrangement of pixels formed using a printer having defective ink emission nozzles without using a method of compensating for a defective pixel. White circles represent pixels that correspond to normal ink emission nozzles, and gray or shaded circles represent pixels that correspond to defective ink emission nozzles and therefore defective elements or pixels. The defective elements or pixels may be blank dots where the ink is not emitted, for example.

Figure 2B illustrates an image formed by rearranging and printing halftoning-processed data so as to compensate for the defective pixels under the condition of Figure 2A. The ink is not emitted on the positions of the defective pixels, as shown in Figure 2A, but the ink is emitted on positions adjacent to the positions of the defective pixels. That is, the pixels on which the ink is to be emitted are rearranged in directions indicated by arrows shown in Figure2B.

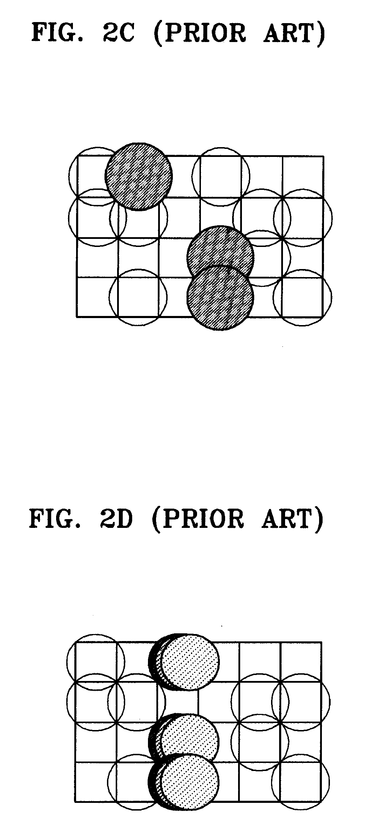

Figure 2C illustrates a alternative conventional method of compensating for adjacent defective blank pixels by increasing an amount of ink emitted by each adjacent pixels in the compensation method of Figure 2B, thereby increasing the relative size of the pixel area covered by the ink.

Figure 2D illustrates another compensation method wherein a black colour is synthesised by overlapping colours of cyan, magenta, and yellow and printing the same using colour-ink emission nozzles which correspond to a defective black-ink nozzle. In other words, a defective pixel generated because black ink is not emitted in a black/white printing mode of a colour printer can be compensated for by using a combination of coloured inks emitted from the colour ink nozzles corresponding to the defective pixel.

However, when defective pixels are densely populated, a complicated algorithm is required to determine adjacent pixels that can be substituted for the respective defective pixels. Other devices and signal lines are required to perform the complicated algorithm. Also, a user may identify the position of a compensated defective pixel caused by a regular compensation pattern on which compensation is performed using pixels immediately adjacent to the defective pixel. In that case, the compensation method may not be considered an effective method of compensating for a defective pixel. Furthermore, since the method of emitting an excessive amount of ink on the adjacent pixel requires controlling the amount of ink emitted, elaborate and complicated control logic and circuitry are required. Yet further, the method of synthesizing a black pixel by using coloured inks can be used only in the black/white printing mode of a colour printer, and an excessive amount of ink is consumed unnecessarily.

The present invention aims to provide an apparatus and a method for compensating for a defective pixel capable of compensating for image quality deterioration caused by the defective pixel. This can be achieved by performing halftoning in consideration of a defective image-forming element when some of a plurality of image-forming elements are defective in an image-forming apparatus (such as a printer, a light-emitting diode (LED), and so on) arranged to reproduce a continuous grayscale using image-forming elements for forming limited grayscale pixels.

According to an aspect of the present invention, there is provided an apparatus for compensating for a defective pixel comprising a defective pixel information detecting unit for detecting whether input continuous grayscale data forms a defective pixel caused by a defective image-forming element and outputting the detected result for defective pixel information, and a halftoning unit for halftoning the continuous grayscale data using error diffusion depending on or in consideration of the defective pixel information.

The halftoning unit may comprise a quantizing unit for quantizing and outputting input data, a data selecting unit for selecting preset data or the quantized data based on the defective pixel information and outputting the selected data as halftone-processed data, a subtracter for subtracting an output of the data selecting unit from the input data and outputting the subtracted result as an error, an error diffusion unit for diffusing the error to neighbouring pixels, and an adder for adding the continuous grayscale data and the diffused error and outputting the result as input data.

According to another aspect of the present invention, there is provided a method of compensating for a defective pixel comprising detecting whether input continuous grayscale data forms a defective pixel caused by a defective image-forming element and determining the detected result as defective pixel information, and halftoning the continuous grayscale data using error diffusion depending on or in consideration of the defective pixel information.

The halftoning may comprise adding the continuous grayscale data and a diffused error to generate input data, quantizing the input data, determining whether the continuous grayscale data forms a defective pixel based on the defective pixel information, if the defective pixel is judged to be formed, determining preset data as halftone-processed data, and determining the quantized data as the halftone-processed data if the defective pixel is not judged to be formed, wherein an error is calculated by subtracting the halftone-processed data from the input data, and the diffused error is generated by diffusing the calculated error to neighbouring pixels.

According to another aspect of the present invention, there is provided a computer-readable recording medium having recorded thereon a program for compensating for a defective pixel, wherein the program controls an apparatus for compensating for the defective pixel by detecting whether input continuous grayscale data forms a defective pixel caused by a defective image-forming element and determining the detected result as defective pixel information, and halftoning the continuous grayscale data using error diffusion depending on or in consideration of the defective pixel information.

Embodiments of the present invention are now described by way of example and with reference to the attached drawings in which:

Figure 1 is a block diagram of conventional apparatus for compensating for a defective pixel;

Figures 2A through 2D are conceptual views of data rearranging techniques, which are conventional methods of compensating for a defective pixel;

Figure 3 is a block diagram of an apparatus for compensating for a defective pixel according to an embodiment of the present invention;

Figures 4A and 4B are conceptual views illustrating a case where a defective ink emission nozzle exists in an ink emission nozzle set;

Figures 5A and 5B are conceptual views illustrating a case where defective portions exist on a photosensitive drum surface of a laser printer;

Figures 6A and 6B are conceptual views illustrating examples where a defective pixel is detected in an ink emission nozzle set;

Figures 7A and 7B are block diagrams illustrating operations of a defective pixel information detecting unit and a data selecting unit according to an embodiment of the present invention;

Figure 8 is a view of a Floyd-Steinberg error filter, according to an embodiment of the present invention;

Figure 9 is a flowchart for explaining operations of an apparatus and a method for compensating for a defective pixel according to an embodiment of the present invention; and

Figure 10 is a view illustrating a printed result obtained using an embodiment of the present invention.

Throughout the drawings, like reference numerals will be understood to refer to like parts, components and structures.

The present invention will now be described more fully with reference to the accompanying drawings, in which exemplary embodiments of the invention are shown. In the following description, a detailed description of known functions and configurations incorporated herein has been omitted for clarity and conciseness.

An image-forming apparatus to which the present invention is applied is assumed to be a printer for illustrative purposes. However, the application of the present invention is not limited to a printer but can be readily applied to any image-forming apparatus reproducing a continuous grayscale image using limited level grayscale pixels.

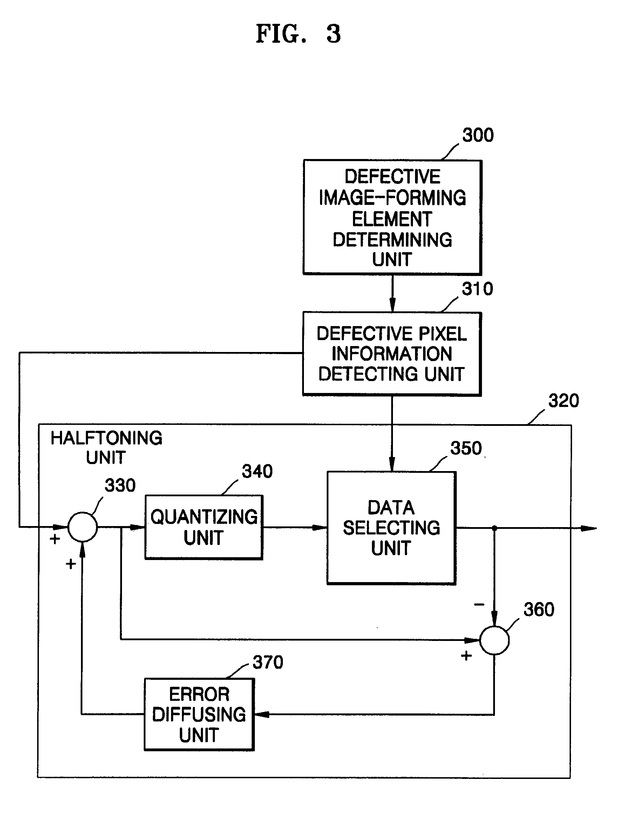

Figure 3 is a block diagram of an apparatus for compensating for a defective pixel according to an embodiment of the present invention. The apparatus comprises: a defective image-forming element determining unit 300, a defective pixel information detecting unit 310, and a halftoning unit 320. Here, the halftoning unit 320 comprises an adder 330, a quantizing unit 340, a data selecting unit 350, a subtracter 360, and an error diffusing unit 370.

The defective image-forming element determining unit 300 determines whether a defective image-forming element exists among an array of image-forming elements. Here, the defective image-forming element may be an ink emission nozzle that emits ink more or less than a predetermined amount among the ink emission nozzles of an inkjet printer, or a position of a photosensitive drum that is charged more or less than a predetermined quantity of electric charges among the positions of the photosensitive drum of a laser printer. Here, the predetermined amount or quantity means an input of the image-forming element, e.g., an ink emission amount that corresponds to halftone-processed data. A printer has halftone-processed data, that is, 0 or 1 for a quantized grayscale data value, and emits or does not emit a predetermined amount of ink depending on that data value. Also, in the case of a laser printer, the respective positions of the photosensitive drum should be charged with a quantity of electric charge required for an ink toner to be attached to the photosensitive drum. In this case, the predetermined quantity indicates a quantity of electric charge appropriate for the ink toner to be attached to the photosensitive drum. Also, a defective image-forming element in a display device may be generated in the case where an LED used for the display device is damaged, and so brightness of a predetermined level cannot be displayed.

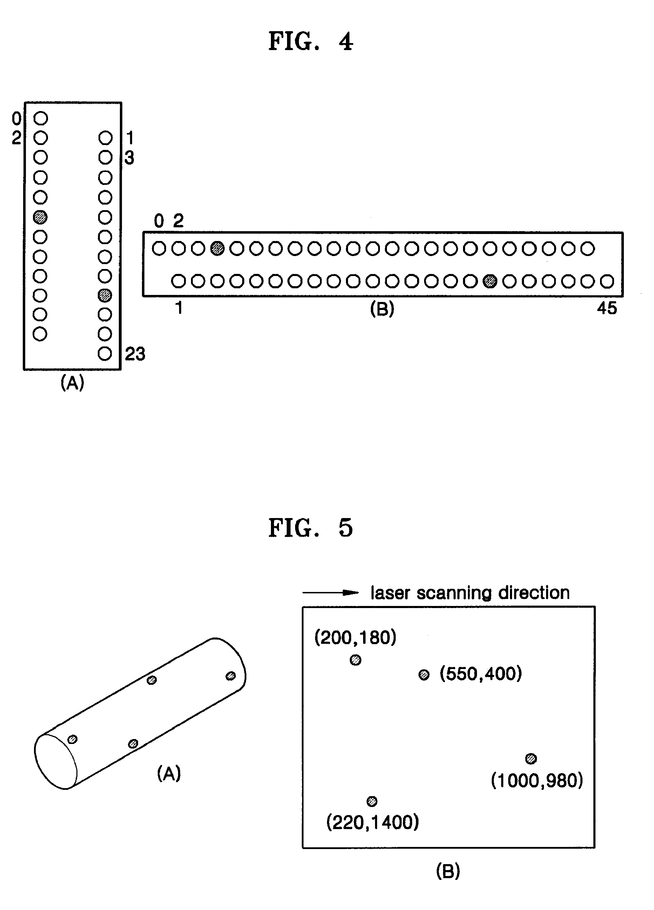

Figure 4A is a conceptual view illustrating a case where a defective ink emission nozzle exists in a shuttle-type ink emission nozzle set.

Figure 4B is a conceptual view illustrating a case where a defective ink emission nozzle exists in an array-type ink emission nozzle set.

Figures 5A and 5B are conceptual views illustrating a case where defective portions exist on a photosensitive drum surface of a laser printer. Figure 5A illustrates a photosensitive drum having portions where a charged quantity is insufficient, and

Figure 5B illustrates the photosensitive drum represented as a plane with coordinates.

The defective image-forming element determining unit 300 stores the values 10 and 17, and the values 6 and 33 for the cases of Figures 4A and 4B, respectively, these values relating to the defective elements as illustrated by the shaded areas in the respective figures. In the case of the photosensitive drum of Figure 5, the defective image-forming element determining unit 300 stores coordinate values of (200, 180), (550, 400), (1000,980), and (220, 1400), which correspond to positions on the drum which are insufficiently charged. These values are provided as defective image-forming element information to the defective pixel information detecting unit 310.

A method of determining a defective image-forming element can be a method of incorporating a module for detecting whether an ink emission nozzle normally operates in an image-forming apparatus, or a method of using a separate device for detecting the position of a defective image-forming element from an output of the image-forming apparatus.

The defective pixel information detecting unit 310 detects whether input continuous grayscale data forms a defective pixel caused by a defective image-forming element and outputs the detected result as defective pixel information. It is possible to detect the defective pixel by mapping in advance the pixels to be formed by the respective image-forming elements. This can be done by using the defective image-forming element information provided from the defective image-forming element determining unit 300. That is, a coordinate $(X_d, Y_d)$ of a pixel that corresponds to the defective ink emission nozzle is calculated using the defective image-forming element information, and the calculated position is compared with a coordinate $(m,n)$ of a currently halftone-processed pixel, and if the two positions are identical, the data selecting part 350 selects a preset signal.

The defective pixel information comprises information regarding a defective pixel, and an example of the defective pixel information will be described below together with the data selecting part 350.

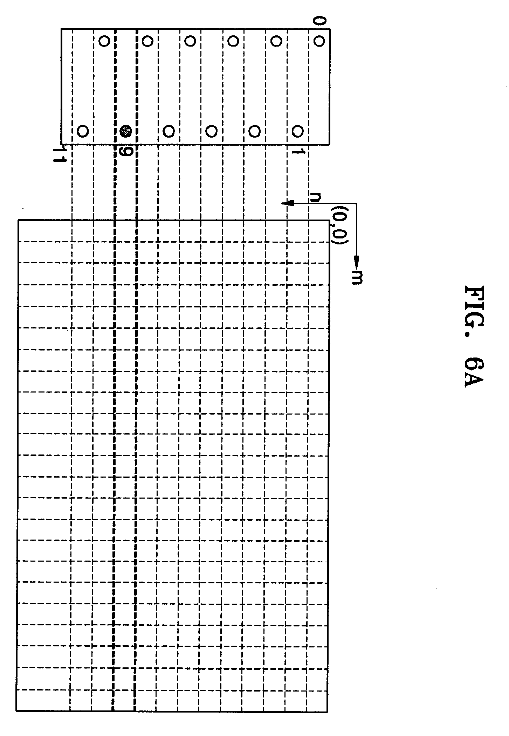

Figure 6A is a conceptual view illustrating an example of detecting a defective pixel when a shuttle-type ink emission nozzle set is used.

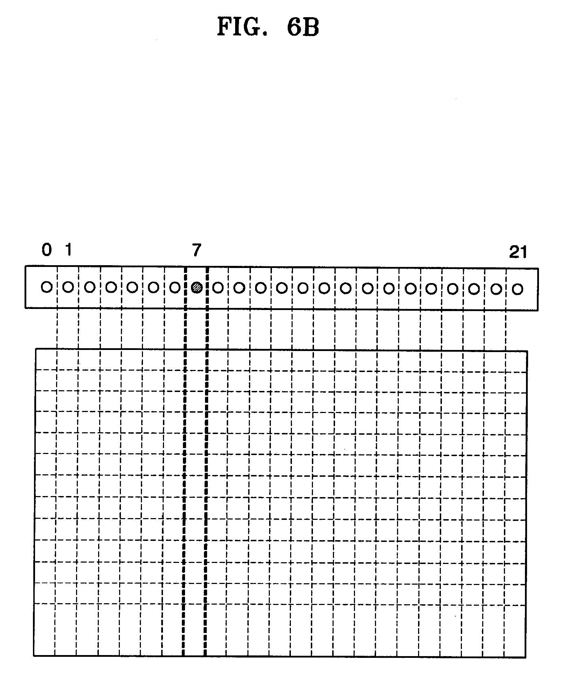

Figure 6B is a conceptual view illustrating an example of detecting a defective pixel when an array-type ink emission nozzle set is used.

Since a 9th ink emission nozzle is defective in a shuttle-type printer head, as shown in Figure 6A, all rows where n=9 among coordinates (m,n) are detected or determined as being defective pixels. Also, since a 7th ink emission nozzle is defective in an array-type printer head, as shown in Figure 6B, all columns where m=7 are detected or determined as being defective pixels. The defective pixel information detecting unit 310 and the data selecting part 350 operate so that a preset signal is output for all of the pixels that correspond to the 9th row or the 7th column, respectively, for the arrangement in Figures 6A and 6B by way of an example.

The adder 330 adds input continuous grayscale data x(m,n) and an error e'(m,n) diffused to the coordinate (m, n) to provide the added result data u(m,n) to the quantizing unit 340. The diffused error e'(m,n) will be described below.

The quantizing unit 340 quantizes the added data u(m,n) into a predetermined level and provides the quantized data to the data selecting unit 350. The quantized data may have a binary data form of 0 or 1 but may have a data form having a quantized level greater than the binary data depending on an image-forming element. For example, in the case where there are three ink emission nozzles that correspond to one pixel and ink amounts emitted from the respective ink emission nozzles are different, four grayscales comprising a blank pixel may be generated. In that case, the quantized data value can be 2 bits.

The data selecting unit part 350 selects preset data or the quantized data on the basis of the defective pixel information and outputs the selected result as halftone-processed data.

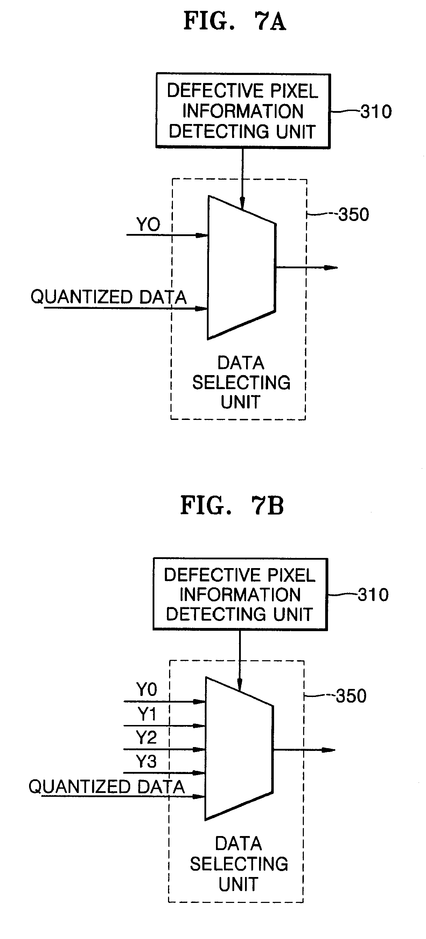

Figures 7A and 7B are block diagrams illustrating operations of the defective pixel information detecting unit 310 and the data selecting unit 350 according to exemplary embodiments of the present invention.

According to the current exemplary embodiments of the present invention, defective pixel information is represented by a selection control signal of a multiplexer.

Figure 7A is a block diagram for illustrating when an image-forming apparatus supports halftone-processed data having two values. When the defective image-forming element is an ink emission nozzle through which ink is not emitted in an inkjet printer, a preset value Y0 is a halftone-processed data value that determines that the ink is not emitted. For example, in the case of an image-forming apparatus that does not emit the ink when the halftone-processed data is 0, the value Y0 is set to 0. When detecting that a current coordinate is formed of a defective pixel, the defective pixel information detecting unit 310 provides a selection control signal to the data selecting unit 350 so that the data selection part 350 may select the value Y0.

Figure 7B is a block diagram for illustrating when an image-forming apparatus supports halftone-processed data having four values according to an embodiment of the present invention.

With reference to Figure 7B, three ink emission nozzles emitting different amounts of ink respectively, for one pixel, is used as an example. In this case, the number of reproduced grayscales becomes four, including a grayscale for a blank pixel. When one of the three ink emission nozzles is defective and a current pixel corresponds to the defective ink emission nozzle, there are two methods of compensating for a defective pixel. That is, there is a first method of generating a selection control signal that prevents ink from being emitted from a nozzle: the selection control signal that allows the data used to not emit ink from a nozzleis selected. Also, there is a second method of generating a selection control signal that allows halftone-processed data generating a grayscale most similar to the grayscale to be formed on the defective pixel to be selected. The first method has an effect where an error is reflected in halftoning by selecting data generating the grayscale formed by the defective image-forming element.

Y0 is a data signal that corresponds to a blank pixel and Y1, Y2, and Y3 are data signals that allow the ink to be emitted. In this case, Y1, Y2, and Y3 are ordered such that an amount of ink emitted by a nozzle increases. In particular, when a grayscale to be formed by a current coordinate is a grayscale Y3 and the ink emission nozzle that corresponds to the grayscale Y3 is defective, Y0 is selected using the first method and Y2 is selected using the second method. To generate a selection control signal that allows a Y0 signal or a Y2 signal to be selected, the defective pixel information detecting unit 310 should have information that a grayscale to be formed by a current coordinate is a grayscale Y3. This information can be obtained by the defective pixel information detecting unit 310 having a unit that performs halftoning.

Another method of obtaining the above information, unlike the structure of Figure 3, comprises a method of receiving an output u(m,n) from the quantizing unit 340 and determining a grayscale to be formed by a current coordinate.

With reference to Figure 3, the subtracter 360 subtracts halftone-processed data b(m,n) from input data u(m, n) of the quantizing unit 340 and outputs the subtracted result e(m,n) as an error.

The error diffusing unit 370 diffuses an error provided from the subtracter 370 to neighbouring pixels. For example, an error e'(m,n) diffused to a current pixel x(m,n) is obtained by Equation 1.

$$e'(m,n) = \sum_{(k,l) \in R} e(m-k, n-l) w(k,l) \qquad (1)$$

where w(k,l) is a weighting factor for diffusing an error to neighbouring pixels.

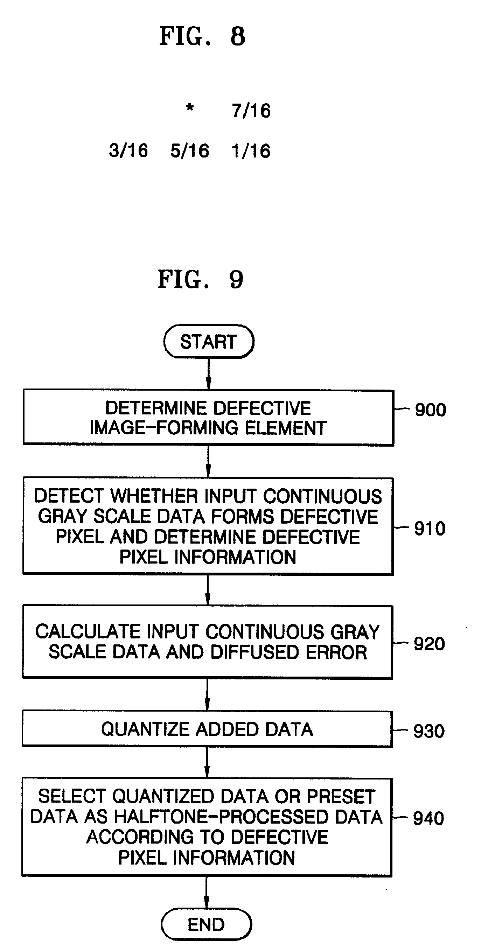

Figure 8 illustrates an example of a Floyd-Steinberg error filter according to an exemplary embodiment of the present invention. A mark * indicates a coordinate of a current pixel and neighbouring numeric values are weighting factors which represent an amount in which an error of the current pixel is to be diffused to the neighbouring pixels.

As a result, data u(m,n) obtained by error-diffusing current input continuous grayscale data is obtained by Equation 2.

$$u(m,n) = x(m,n) + \sum_{(k,l) \in R} e(m-k, n-l) w(k,l) \qquad (2)$$

Figure 9 is a flowchart showing operations of an apparatus and a method for compensating for a defective pixel according to an exemplary embodiment of the present invention.

First, a defective image-forming element is determined by the defective image-forming element determining unit 300 (operation 900). The method of determining the defective image-forming element has been described previously.

The next step detects whether input continuous grayscale data forms a defective pixel caused by a defective image-forming element. This is carried out using the defective pixel information detecting unit 310 and the detected result is determined as defective pixel information (operation 910).

The continuous grayscale data and a diffused error provided from the error diffusing unit 370 are added by the adder 330, and the summed output is provided to the quantizing unit 340 (operation 920).

The added data is then quantized by the quantizing unit 340 (operation 930).

Whether the continuous grayscale data forms the defective pixel is judged on the basis of the defective pixel information. If the defective pixel is determined to have been formed, the preset data is determined as the halftone-processed data. If the defective pixel is determined not to have been formed, the quantized data is determined as the halftone-processed data (operation 940). The defective pixel information is provided by the defective pixel information detecting unit 310 and the determining of the halftone-processed data is performed by the data selecting unit 350.

The error is calculated by the subtracter 360 which subtracts the added data from the halftone-processed data, and the calculated error is diffused to the neighbouring pixels by the error diffusing unit 370 and input to the adder 330.

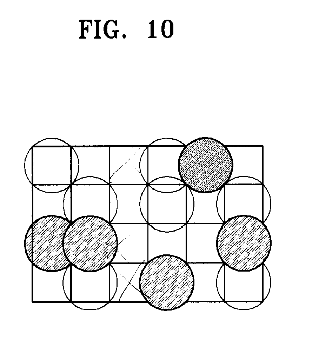

Figure 10 is a view illustrating a printed result obtained using an exemplary embodiment of the present invention and is now compared with the conventional data rearranging technique of Figure 2A.

As in Figures 2B and 2C, grey circles represent pixels used for compensating for the defective pixels. Unlike Figures 2B and 2C, however, the pixels output for compensation in Figure 10 are not necessarily adjacent to the defective pixels. That is, according to an exemplary embodiment of the present invention, even in a case where the quantizing unit 340 determines the ink to be emitted, the data selecting unit 350 controls the ink not to be emitted by the defective pixels. Therefore, a quantized error diffused to the neighbouring pixels increases and the increased error increases a probability that the ink can be emitted to the pixels neighbouring the defective pixel. That is, unlike Figures 2B and 2C, more halftone-processed data is rearranged.

The invention can also be embodied as computer-readable codes on a computer-readable recording medium. The computer-readable recording medium is any data storage device that can store data which can be thereafter be read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet), or the like. The computer-readable recording medium can also be distributed over network coupled computer systems so that the computer-readable code is stored and executed in a distributed fashion. Also, functional programs, codes, and code segments for accomplishing the present invention can be easily construed by programmers skilled in the art to which the present invention pertains.

According to the present invention, in an image-forming apparatus (such as a printer, an LED, or the like) reproducing continuous grayscales using a plurality of image-forming elements having limited grayscale forming pixels, image quality deterioration caused by defective pixels can be compensated for by performing halftoning in consideration of the defective image-forming element when some of the image-forming elements are defective.

While the present invention has been particularly shown and described with reference to exemplary embodiments thereof, it will be understood by those of ordinary skill in the art that various changes in form and details may be made therein without departing from the scope of the present invention as defined by the following claims. Although embodiments of the present invention are described above with reference to ink-jet printers and the like, it is to be understood that the present invention is not limited to such devices and other forms of image forming apparatus can benefit from the present invention.

**Claims**

1. An apparatus for compensating for a defective pixel comprising:

   detecting means for detecting whether input data corresponds to a defective pixel caused by a defective image-forming element and for outputting the detected result as defective pixel information; and
   halftoning means for halftoning the input data using error diffusion depending on the defective pixel information.

2. The apparatus of claim 1, wherein the input data comprises continuous grayscale data.

3. The apparatus of claim 1 or 2, further comprising determining means for detecting the defective image-forming element among an array of image-forming elements.

4. The apparatus of claim 1 or 2, wherein the defective image-forming element is an ink emission nozzle, which, during use, emits an amount of ink other than a predetermined amount, the ink emission nozzle forming a portion of an inkjet printer.

5. The apparatus of claim 1 or 2, wherein the defective image-forming element is a position of, or a pixel on a laser printer photosensitive drum that is charged by an amount having more or less than a predetermined quantity of electric charge among other positions or pixels on the drum.

6. The apparatus of claim 1 or 2, wherein the halftoning unit comprises:

   quantizing means for quantizing input data;
   data selection means for selecting preset data or the quantized data based on the defective pixel information and for outputting the selected data as halftone-processed data;
   a subtracter for subtracting an output of the data selection means from the input data and for outputting the subtracted result as an error;
   error diffusion means for diffusing the error to one or more neighbouring pixels; and
   an adder for adding continuous grayscale data with the diffused error and for outputting the result as the input data.

7. The apparatus of claim 6, wherein the preset data can be used for generating a grayscale similar to a grayscale of the quantized data, said preset data being at least a portion of data for driving one or more normal image-forming elements corresponding to a position of the defective pixel.

8. The apparatus of claim 6, wherein the preset data corresponds to a grayscale formed by the defective image-forming element.

9. The apparatus of claim 6, wherein the preset data corresponds to a blank pixel.

10. A method of compensating for a defective pixel comprising:

    detecting whether input continuous grayscale data comprises a defective pixel caused by a defective image-forming element and determining the detected result as defective pixel information; and
    halftoning the continuous grayscale data using error diffusion depending on the defective pixel information.

11. The method of claim 10, further comprising detecting the defective image-forming element among a plurality of image-forming elements.

12. The method of claim 10, wherein the defective image-forming element is an ink emission nozzle emitting an amount of ink other than a predetermined amount, said ink emission nozzle forming a portion ofan inkjet printer.

**13.** The method of claim 10, wherein the defective image-forming element is a position or pixel of a laser printer photosensitive drum that is charged by an amount having more or less than a predetermined quantity of electric charge among other positions or pixels on the drum.

**14.** The method of claim 10, wherein the halftoning comprises:

adding the continuous grayscale data and a diffused error to generate input data;
quantizing the input data;
determining whether the continuous grayscale data forms a defective pixel based on the defective pixel information;
if the defective pixel is determined to be formed, determining preset data as halftone-processed data; and
if the step of determining whether the continuous grayscale data forms a defective pixel is negative, then determining the quantized data as the halftone-processed data,
wherein, an error is calculated by subtracting the halftone-processed data from the input data, and the diffused error is generated by diffusing the calculated error to neighboring pixels.

**15.** The method of claim 14, wherein the preset data is data that generates a grayscale similar to a grayscale of the quantized data, said preset data forming a portion of data driving one or more normal image-forming elements that correspond to a position of the defective pixel.

**16.** The method of claim 14, wherein the preset data corresponds to a grayscale formed by the defective image-forming element.

**17.** The method of claim 14, wherein the preset data corresponds to a blank pixel.

**18.** A computer-readable recording medium having recorded thereon a program for compensating for a defective pixel, wherein the program controls an apparatus for compensating for the defective pixel and comprises:

a first set of instructions for detecting whether input continuous grayscale data forms a defective pixel caused by a defective image-forming element and determining the detected result as defective pixel information; and
a second set of instructions for halftoning the continuous grayscale data using error diffusion dependant on the defective pixel information.

**19.** The computer-readable recording medium of claim 18, wherein the second set of instructions comprises:

a third set of instructions for adding the continuous grayscale data and a diffused error to generate input data;
a fourth set of instructions for quantizing the input data;
a fifth set of instructions for determining whether the continuous grayscale data forms a defective pixel based on the defective pixel information;
a sixth set of instructions for determining preset data as halftone-processed data if the defective pixel is determined to be formed; and
a seventh set of instructions for determining the quantized data as the halftone-processed data if the defective pixel is determined not to be formed,

wherein an error is calculated by subtracting the halftone-processed data from the input data, and the diffused error is generated by diffusing the calculated error to neighbouring pixels.

# FIG. 1 (PRIOR ART)

```
                              110
                    ┌──────────────────┐
                    │    DEFECTIVE     │
                    │  IMAGE-FORMING   │
                    │    ELEMENT       │
                    │  DETERMINING     │
                    │     UNIT         │
                    └──────────────────┘
                              │
        100                   ▼  120                130
┌──────────────┐     ┌──────────────┐     ┌──────────────┐
│  HALFTONING  │────▶│    DATA      │────▶│   IMAGE      │
│    UNIT      │     │ REARRANGING  │     │  -FORMING    │
│              │     │    UNIT      │     │    UNIT      │
└──────────────┘     └──────────────┘     └──────────────┘
```

FIG. 2A (PRIOR ART)

FIG. 2B (PRIOR ART)

## FIG. 2C (PRIOR ART)

## FIG. 2D (PRIOR ART)

# FIG. 3

300 DEFECTIVE IMAGE-FORMING ELEMENT DETERMINING UNIT

310 DEFECTIVE PIXEL INFORMATION DETECTING UNIT

320 HALFTONING UNIT

330 +  +

340 QUANTIZING UNIT

350 DATA SELECTING UNIT

360 −  +

370 ERROR DIFFUSING UNIT

# FIG. 4

(A)

(B)

# FIG. 5

laser scanning direction

(A)

(200,180)

(550,400)

(1000,980)

(220,1400)

(B)

FIG. 6A

# FIG. 6B

# FIG. 7A

DEFECTIVE PIXEL
INFORMATION
DETECTING UNIT ─310

YO

QUANTIZED DATA

─350

DATA
SELECTING
UNIT

# FIG. 7B

DEFECTIVE PIXEL
INFORMATION
DETECTING UNIT ─310

Y0
Y1
Y2
Y3
QUANTIZED DATA

─350

DATA
SELECTING
UNIT

# FIG. 8

```
        *      7/16

  3/16  5/16  1/16
```

# FIG. 9

START

DETERMINE DEFECTIVE IMAGE-FORMING ELEMENT — 900

DETECT WHETHER INPUT CONTINUOUS GRAY SCALE DATA FORMS DEFECTIVE PIXEL AND DETERMINE DEFECTIVE PIXEL INFORMATION — 910

CALCULATE INPUT CONTINUOUS GRAY SCALE DATA AND DIFFUSED ERROR — 920

QUANTIZE ADDED DATA — 930

SELECT QUANTIZED DATA OR PRESET DATA AS HALFTONE-PROCESSED DATA ACCORDING TO DEFECTIVE PIXEL INFORMATION — 940

END

FIG. 10

**European Patent Office**

**EUROPEAN SEARCH REPORT**

Application Number

EP 06 11 6004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 536 370 A (OCE TECH BV [NL]) 1 June 2005 (2005-06-01) * paragraphs [0002], [0007], [0009], [0024], [0044] * ----- | 1-19 | INV. H04N1/40 B41J2/16 |

TECHNICAL FIELDS SEARCHED (IPC)

H04N
B41J

The present search report has been drawn up for all claims

| Place of search | Date of completion of the search | Examiner |
|---|---|---|
| Munich | 25 October 2006 | Heiner, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 11 6004

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2006

| Patent document cited in search report | | Publication date | Patent family member(s) | | Publication date |
|---|---|---|---|---|---|
| EP 1536370 | A | 01-06-2005 | JP | 2005153535 A | 16-06-2005 |
| | | | US | 2005116981 A1 | 02-06-2005 |

EPO FORM P0459

For more details about this annex : see Official Journal of the European Patent Office, No. 12/82